# NEW EUROPEAN PATENT SPECIFICATION

(11) **EP 2 725 134 B2**
(45) Date of publication and mention of the opposition decision: **21.03.2018**
(45) Mention of the grant of the patent: 27.05.2015
(21) Application number: 13189264.8
(22) Date of filing: 18.10.2013
(51) Int. Cl.: D21C 1/02, D21B 1/36

(54) **Piping System from Reactor to Separator and Method to Control Process Flow**
Rohrleitungssystem vom Reaktor zum Abscheider und Verfahren zur Steuerung des Prozessablaufs
Système de tuyauterie allant d'un réacteur à un séparateur et procédé de commande de flux de processus

(30) Priority: 24.10.2012 US 201261717684 P; 09.10.2013 US 201314049275
(43) Date of publication of application: 30.04.2014
(73) Proprietor: Andritz, Inc., Glens Falls, NY 12801 (US)
(72) Inventor: Rawls, Joseph M., Alpharetta, Georgia 30005 (US); Pschorn, Thomas, Sherbrooke, Québec J1M2B2 (CA); Stromberg, Bertil, Diamond Point, New York 12824 (US); Pepin, Patrick, Queensbury, New York 12804 (US)
(74) Representative: Hoffmann Eitle

(56) References cited:
- WO-A-97//00997
- WO-A2-2009/108773
- US-A- 1 922 313
- US-A- 2 882 967
- US-A1- 2008 277 082

## Description

### BACKGROUND OF THE INVENTION

Current steam explosion systems usually consist of a reactor vessel, a piping system, and a separation device. The reactor vessel holds steam-infused biomaterial under pressure. The steam-infused biomass material rapidly depressurizes in the piping system as it is conveyed from the reactor vessel to the separation device. The separation device recaptures steam and other desirable gasses.

The piping systems have traditionally been susceptible to plugging, blocking, or obstruction by the biomass material that flows through them. When obstructed, traditional steam explosion systems are generally shut down for maintenance. This may result in a loss of production. Many piping system features that contribute to this problem.

### BRIEF DESCRIPTION OF THE INVENTION

In steam explosion systems, it is desirable and typical for the pipes in these piping systems to have a small diameter to minimize steam consumption because excessive steam use increases production costs. Small pipe diameters may help accomplish this goal but unfortunately, these small diameters also contribute to blockage.

The pipes in the piping systems typically contain several restriction devices such as valves, bends, elbows, and lengthy passages. The valves may sometimes be set to partially opened positions to achieve different desired flow rates of biomass material and steam. These partially opened valves may present valve edges within the pipes that are prone to catching deposits of biomass material. As these biomass deposits accumulate, the pipes become plugged, blocked, or obstructed.

Further, flow velocities approaching the speed of sound are typical in systems that operate with a high pressure drop from the reactor to the separation device. As a result, the valves and other movable parts within the piping systems can wear out frequently requiring repair or replacement.

Efforts to reduce the amount of plugging, blocking, or obstruction in a piping system have generally involved shortening the length of piping between the reactor vessel and the separation device. The diameter of the piping may also be increased, but this may require an increased quantity of steam usage. Shortening the piping reduces the surface area and edges on which biomass deposits may become caught. To shorten the piping, the reactor vessel and separation device must be physically close to each other. Space limitations and other equipment can impose difficulties in proximally locating a reactor vessel and separation device.

There is a long felt need for piping systems used in steam explosion systems that are less susceptible to biomass deposits and that have relatively few components that are prone to wear, while also allowing for a means to adjust the steam flow from the reactor vessel to the separation device.

In the light of this long felt need, the present invention provides an apparatus and a method for steam explosion treatment of biomass material as set forth in the appended independent claims. Preferred optional features are recited in the respective dependent claims.

The present embodiment generally relates to piping systems for mixtures of steam and biomass material flowing from a pressurized reactor vessel, and particularly relates to piping systems between a pressurized reactor vessel for a steam explosion process and a separation device. This embodiment allows for steam and biomass material to flow through the piping system, which may be adjusted by changing the piping lengths and adjusting the location of the collection-expansion manifold relative to the discharge lines of the pressurized reactor vessel.

A method and a system have been conceived to control or limit steam flow out of the pressurized reactor vessel where a pressurized reactor vessel is connected by piping to a separation device. For the purposes of this application, "piping" or "pipe" refers to any conduit that may be used in a steam explosion system. The steam explosion system includes a pressurized reactor vessel, such as a steam explosion pressurized reactor vessel that has at least two discharge lines that allow the biomass material and steam from the pressurized reactor vessel to flow to a point where the discharge lines connect to a single conduit. This conduit is known as the "collection line" and the point at which the discharge lines connect is known as the "collection-expansion manifold." As the biomass material and steam flow through the collection-expansion manifold, a rapid pressure release occurs. This rapid pressure release causes the biomass material to undergo a steam explosion process as it flows through the collection line and into the separation device.

Each individual discharge line may have a different diameter from each other individual discharge line. In other embodiments, two or more discharge lines may share substantially the same diameter. Each individual discharge line may also have a valve at an inlet end. These valves may be used to control the flow rate of biomass material and steam into each individual discharge line. By using these valves and discharge lines with different diameters, operators may adjust the flow rate of biomass material and steam from the pressurized reactor vessel.

The length of the discharge lines may also be changed to allow for adjustment of the flow rate of biomass material and steam through the discharge lines. The proximity of the collection-expansion manifold to reactor vessel outlets can be adjusted by adding or removing piping length, to thereby regulate the amount of biomass material and steam exiting the pressurized reactor vessel under normal operating conditions. Additionally, if desired, there are other optional components such as nozzle inserts, orifice plates, and valves that can be used as needed to adjust the flow rate of biomass material and steam through the discharge lines. Further, the valve in one or more of the openings for the inlet end of the discharge lines may define a flow passage. This "flow passage" refers to the internal diameter of a discharge line, which may be constant with the diameter of a given valve. The flow passage may have a cross-sectional area that is larger or smaller than the cross-sectional area of the flow passage defined by another valve located in another inlet end of another discharge line. For example, one or two of the valves may define a flow passage having a cross-sectional area that is one half the cross-sectional area of the flow passage defined by the other valves.

An apparatus has been conceived for steam explosion treatment of biomass material comprising : a pressurized reactor vessel configured to contain biomass material and steam, at least two discharge lines each coupled to an outlet of the pressurized reactor vessel, wherein each discharge line has a cross-sectional area, and wherein each discharge line is configured to receive the biomass material and the steam discharged from the pressurized reactor vessel, a collection- expansion manifold connected to outlet ends of each of the discharge lines, a collection line having an inlet connected to the collection-expansion manifold, wherein the collection line is configured to receive the biomass material and the steam flowing from the outlet ends of the discharge lines, and wherein the collection line has a cross-sectional area that is substantially larger than the cumulative cross-sectional area of the at least one discharge line, and a separation device coupled to an outlet end of the collection line to receive the biomass material and the steam from the collection line, and the separation device includes a gas outlet and a biomass material outlet.

The length of each of the discharge lines may be substantially shorter than the length of the collection line. More commonly, the length of each of the discharge lines is substantially shorter than the total length of the line from the pressurized reactor vessel outlet to the separation device inlet in a conventional system. In conventional systems, the discharge line connects the pressurized reactor vessel to the separation device. In some embodiments, the internal passage diameter of each of the discharge lines is uniform through the discharge line. The internal passage diameters of each of the discharge lines may vary widely. However, in some embodiments, the internal passage diameters may fall within a range from 0.125 inches (3.175 mm) to 120 inches (3048 mm). Moreover, for pressurized reactor vessels that measure two meters by three meters, the internal passage diameters may have a range of 0.25 inches (6.35 mm) to 6.0 inches (152.4 mm), or 0.125 inches (3.175 mm) to 0.75 inches (19.05 mm), or 1.0 inches (25.4 mm) to 2.5 inches (63.5 mm), or a range where the upper limit is 4.0 inches (101.6 mm).

With regard to the collection-expansion manifold, the collection-expansion manifold may be a flat plate having a first side of the collection-expansion manifold connected to the discharge lines and an opposite side connected to the collection line with opening throughout the collection-expansion manifold, each of which is aligned with one of the discharge lines.

With regard to the collection line, the internal cross-sectional area of the passage in the collection line may be at least twice to four-hundred times the internal cross-sectional area of the passage in a single discharge line. The pressure in the inlet of the collection line may be substantially less, such as less than three-quarters, even less than one-half, than the pressure in the exit of the discharge line. A valve, such as a fully-open valve, may be placed between the pressurized reactor vessel and the inlet of each of the discharge lines or in the discharge line. The number of discharge lines is at least two or three, or more discharge lines.

In another embodiment, an apparatus has been conceived for steam explosion treatment of biomass material comprising: at least two discharge lines extending from the pressurized reactor vessel at reactor vessel outlets, wherein each of the at least two discharge lines has a cross- sectional area, and wherein the at least two discharge lines are configured to receive the biomass material and the steam discharged from the pressurized reactor vessel, a collection-expansion manifold connected to outlet ends of each of the discharge lines, a collection line having an inlet connected to the collection-expansion manifold, wherein the collection line is configured to receive the biomass material and the steam flowing from the discharge lines, and wherein the collection line has a cross-sectional area that is substantially larger than the cross-sectional area of any of the discharge lines, and a separation device coupled to an outlet end of the collection line, wherein the separation device is configured to receive the biomass material and the steam from the collection line.

A method for steam explosion treatment has been conceived comprising: pressurizing and infusing biomass material with steam, passing the pressurized and infused biomass material and steam through a number of discharge lines, from each of the discharge lines, passing the pressurized and infused biomass material through a collection-expansion manifold and into a collection line, rapidly reducing pressure on the infused biomass material as the infused biomass material enters the collection line from the collection-expansion manifold, treating the infused biomass material with a steam explosion process due to the rapid reduction in pressure, and transporting the steam exploded biomass material through the collection line to a separation device in which the steam exploded biomass material is separated from gases flowing with the steam exploded biomass material in the collection line. This separation device may be a cyclone separator, a gravity settler, an impingement separator, or any other separation device used to recover gas from mixtures.

The distance travelled by the biomass material through the discharge lines may be substantially shorter than the distance the biomass material travels through the collection line. Additionally, the distance travelled by the biomass material and steam through the discharge lines is substantially shorter than the total length of the piping from the reactor outlets to the separation device inlet in a conventional system. For example, the discharge lines may be 10% to 60% of the total length of piping running from the reactor outlets to the separation device inlet depending on project-specific equipment layouts. At least one of the discharge lines may be closed to biomass material by a valve between the pressurized reactor vessel and the inlet end of the at least one discharge line while at least one other discharge line is open to biomass material and steam.

### BRIEF DESCRIPTION OF THE DRAWINGS

FIG. 1 is process flow diagram showing a side view of a pressurized reactor vessel, discharge lines, a collection-expansion manifold, a collection line, and a separation device.
FIG. 2 Is a process flow diagram showing a top view of the pressurized reactor vessel, discharge lines, a collection-expansion manifold, the collection line and the separation device.
FIG. 3 is a schematic diagram of an example embodiment of portion of the pressurized reactor vessel, a nozzle insert, valve, orifice plate, and inlet end to a discharge line.
FIG. 4 is a schematic view of an end view of the collection-expansion manifold.
FIG. 5 is a schematic diagram of a side view of the collection-expansion manifold.

### DETAILED DESCRIPTION OF THE INVENTION

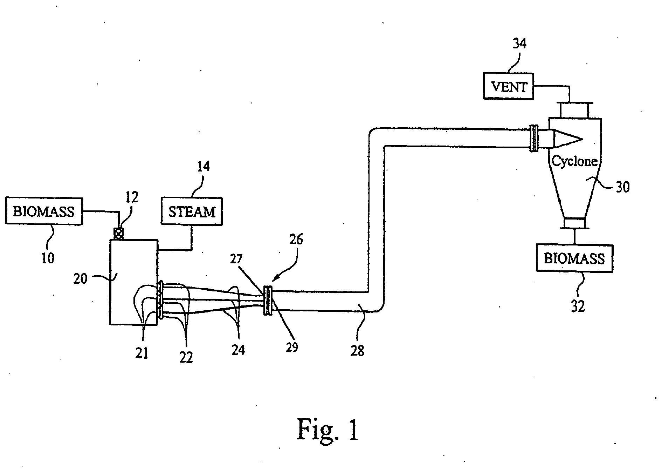

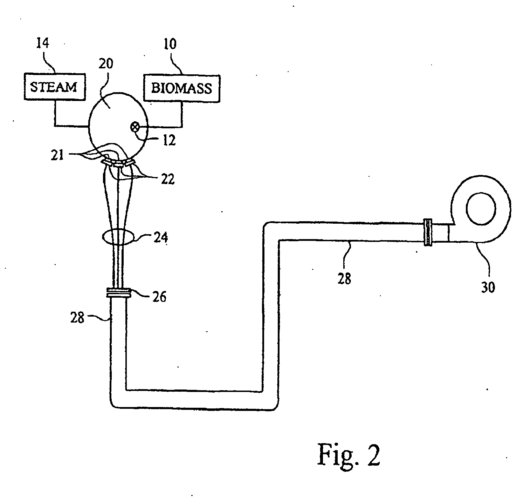

Figs. 1 and 2 illustrate a steam explosion process in which pressurized steam is infused into a biomass material, such as lignocellulosic material. By rapidly releasing the pressure, the steam expands within the biomass material and bursts the cells of the biomass material or defibrillates the biomass material. The biomass material may be lignocellulosic material. Lignocellulosic material includes, but is not limited to: plant material such as wood, wood chips, sawmill and paper mill discards, corn stover, sugarcane bagasse, and other agricultural residues, dedicated energy crops, municipal paper waste, and any other biomass material composed of cellulose, hemicellulose, and lignin.

In this example embodiment of an apparatus for steam explosion treatment, a pressurized reactor vessel 20 receives the biomass material 10 via a high pressure transfer device 12 which conveys the biomass material 10 into a high pressure environment in the pressurized reactor vessel 20. The biomass material 10 may flow continually to the pressurized reactor vessel 20. In other example embodiments, the biomass material 10 may be fed into the pressurized reactor vessel 20 in a batch, semi-batch, or semi-continuous process.

Steam 14 is added to the pressurized reactor vessel 20 to add energy to the biomass material 10. The energy increases the temperature and pressure of the biomass material 10 in the pressurized reactor vessel 20. The temperature in the pressurized reactor vessel 20 may be in a range of 120°C to 300°C, possibly 150°C to 260°C, possibly 160°C to 230°C. The temperature of the biomass material 10 may also be outside this range, depending on the type of biomass material and the steam explosion process the biomass material is to undergo.

The pressurized reactor vessel 20 has multiple reactor vessel outlets 21. Each reactor vessel outlet may communicate with a valve 22 and a discharge line 24. Each discharge line 24 has a discharge line outlet end 27 connected to a collection-expansion manifold 26. The collection-expansion manifold 26 provides a connection between each discharge line outlet end 27 and a single large diameter collection line 28.

The flows of steam and biomass material from the discharge lines 24 pass through the collection-expansion manifold 26, and enter and merge at the collection line 28. The position of the collection-expansion manifold 26 to the biomass material and steam exiting the pressurized reactor vessel 20 can be adjusted by adding or removing piping length, to thereby regulate the amount of steam exiting the pressurized reactor vessel 20 under normal operating conditions. The pressure at the inlet 29 of the collection line 28 may be substantially less, such as less than three-quarters, even less than one-half, than the pressure at each of the discharge line outlet ends 27 that are open to the flow of biomass material and steam. A rapid pressure release occurs as the biomass material and steam pass through the collection-expansion manifold 26 and into the collection line 28. The rapid pressure release causes the biomass material to undergo a steam explosion process as it flows into the collection line 28.

The cross-sectional area of the collection line 28 is substantially greater than any one of the cross- sectional areas of the discharge lines 24 and may even be substantially greater than the sum of the cross-sectional areas of the discharge lines 24. The cross-sectional area of the collection line 28 may be greater than the cross-sectional area of any one of the discharge lines 24 by at least a factor of two. In other example embodiments, the cross-sectional area of the collection line 28 may be greater than the cross-sectional area of any one of the discharge lines by at least a factor of five or at least a factor of six. The cross-sectional area change can be accomplished by a sudden pipe enlargement, a step out or a series of step outs, conical pipe sections, eccentric and concentric pipe reducers, pipe increasers or other gradual means to change pipe diameter.

The inlet 29 of the collection line 28 is at the collection-expansion manifold 26. Although any separation device may be used, in this example embodiment a cyclone separator 30 communicates with the collection line 28. The cyclone separator 30 may be used to separate the steam exploded biomass and steam from collection line 28 to produce the processed biomass 32 and gas 34. There may be multiple cyclone separators 30 and multiple collection lines 28.

The length of each of the discharge lines 24 may be relatively short, such as in a range of 0.4 meter to 30 meters. Limiting the length of the discharge lines 24 reduces the internal surface area, known as the "wetted" surface area, in the smaller diameter passages of the discharge lines 24 and allows the discharge lines 24 to be relatively free of pipe fittings, bends, elbows and other potential sources for collecting biomass deposits. In addition, the internal cross-sectional area of the passage for at least one discharge line 24 may differ, e.g., greater by 50 percent or 100 percent, from an internal cross-sectional area of another one or more of the discharge lines 24 connected to the pressurized reactor vessel 20.

The multiple discharge lines 24, which can be individually opened or closed via the valves 22 provide a range of biomass material and steam flow rates through the open discharge lines that can be selected. For example, a relatively low flow rate may be achieved by opening just one valve 22 and closing the remaining valves 22 such that biomass material and steam flow through just one of the discharge lines 24. The flow rate of biomass material and steam may be increased incrementally by opening valves 22 for each of the other discharge lines 24. The number of flow rates that may be selected by selectively opening and closing the valves 22 may be greater than the number of discharge lines 24 if the passages of the discharge lines 24 have different internal cross-sectional areas. For example, if at least all but one of the discharge lines 24 have a biomass material and steam passage which has an internal cross-sectional area that is twice (100 percent greater than) the internal cross-sectional area of the passage of the remaining discharge line 24, the remaining discharge line 24 may be opened or closed to provide a half-step increment in the flow that occurs when the valves 22 are opened or closed to the other discharge lines 24.

The discharge lines 24 may each be relatively free of control devices such as throttling valves, nozzle inserts, reduced port valves, orifice plates, and other restriction devices. The valves 22 at the inlet ends of the discharge lines at the reactor vessel outlets 21 may be the only control device in each discharge line 24. To control the flow of steam and biomass material from the pressurized reactor vessel 20 the valves 22 are in a fully opened, partially opened, or fully closed operating position to select one or more of the discharge lines 24 as passages for the steam and biomass material. Minimizing the restriction devices in the discharge lines 24 reduces the tendency of the discharge lines 24 to become plugged, blocked, or obstructed with biomass material and/or tramp material and reduces the risk of failure due to worn restriction devices.

The collection line 28 is a large diameter conduit that may have a smooth wetted surface that is exposed to the biomass material and steam. Due to the collection line's large internal diameter and large cross-sectional area, the collection line 28 may be less prone to being plugged, blocked, or obstructed by biomass depositing on the wetted surface of the collection line 28.

Due to its large diameter, the collection line 28 may extend a substantially longer distance than the discharge lines 24 without a significant risk of becoming plugged, blocked, or obstructed with biomass deposits. The length of the collection line 28 may be substantially longer than any one of the discharge lines 24, such as two to twenty times the length of each of the discharge lines 24.

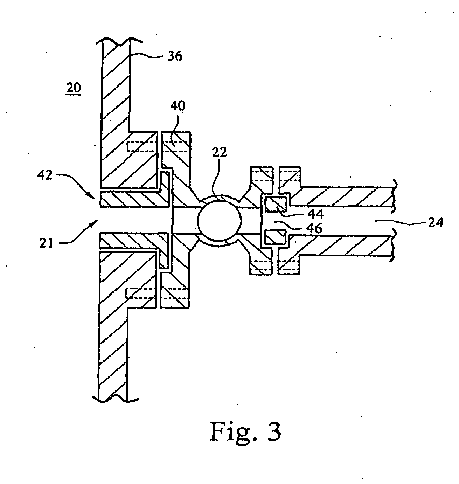

Fig. 3 is a schematic diagram showing the coupling of at least one, possibly two or more, of the discharge lines 24 to the pressurized reactor vessel 20. The coupling between each of the discharge lines 24 and the pressurized reactor vessel 20 may be substantially the same as the coupling shown in Fig. 3. The sidewall 36 of the pressurized reactor vessel 20 has an opening, reactor vessel outlet 21, to allow biomass material and steam to exit the pressurized reactor vessel 20 and pass into the discharge line 24. A studding outlet 40 surrounds the opening, reactor vessel outlet 21, and is fixed to the outer surface of the sidewall 36. The studding outlet 40 supports the valve 22 that provides the coupling between the pressurized reactor vessel 20 and the discharge line 24. An optional nozzle insert 42 may fit in the opening created by reactor vessel outlet21 and provide a smooth, low resistance path for the steam and biomass material from the pressurized reactor vessel 20 to the discharge line 24. The nozzle insert 42 may be in the opening, reactor vessel outlet 21, or in the studding outlet 40. The nozzle insert 42 may be a replaceable insert and used to reduce the size of the opening created by reactor vessel outlet 21 to conform the opening to the diameter of the flow passage in the discharge line 24. The nozzle insert 42 may be either removed or replaced with a nozzle insert 42 having a different sized passage if the discharge line 24 is replaced with a discharge line 24 having a different diameter. Nozzle inserts 42 for this use can be similar to those presented and described in co-pending US application 13/029,801, incorporated herein by reference and a copy of which is attached.

During normal operation and if the corresponding discharge line 24 is selected to be active, the valve 22 may have a fully open position, which does not restrict the flow of biomass material and steam through the valve 22. If the discharge line is selected to be inactive, the valve 22 may have a fully closed position that entirely blocks biomass material and steam from entering the discharge line 24.

An orifice plate 44 may be positioned between the valve 22 and the discharge line 24. The orifice plate 44 may be annular and have a generally circular opening 46 which allows biomass material and steam to flow into the one or more discharge lines 24. The generally circular opening 46 in the orifice plate 44 may be sized to achieve a desired flow rate restriction to the biomass material and steam flowing into the discharge line 24. Various orifice plates 44 may be available for placement between the valve 22 and the discharge line 24. One of the orifice plates 44 may be selected to achieve a desired flow restriction at the inlet to the discharge line 24. The orifice plate 44, nozzle insert 42, valve 22, discharge lines 24, collection-expansion manifold 26, and collection line 28 may be formed of a material, such as a metal, hard polymer material, or ceramic selected to withstand the chemicals of the biomass material, steam, and other environmental considerations.

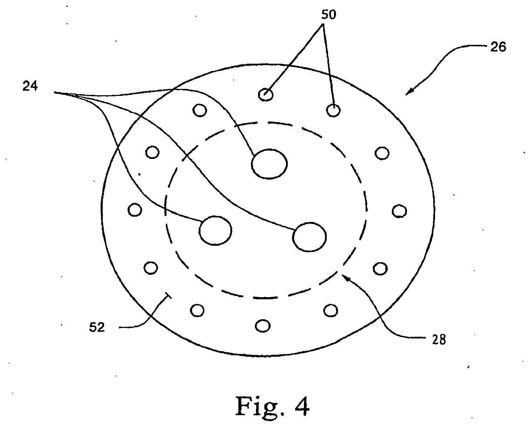

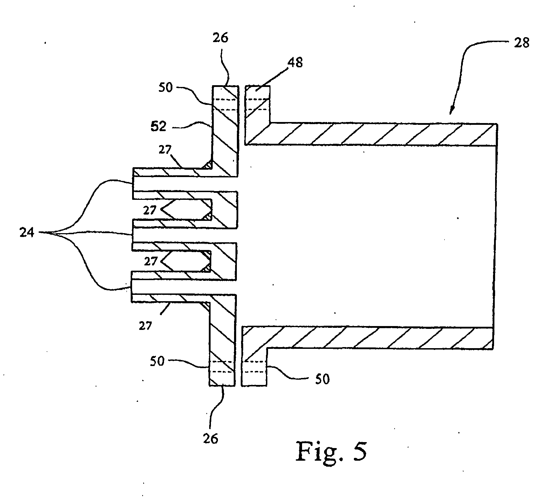

Figs. 4 and 5 are schematic diagrams of an end view (Fig. 4) and a side view (Fig. 5) of the collection-expansion manifold 26. The collection-expansion manifold 26 may be a circular metal plate having an outer annular ring 52 that serves as a coupling flange for a matching flange 48 at the inlet of the collection line 28. Matching circular arrays of bolt holes 50 in the outer annular ring 52 and flange 48 provide passages for connecting bolts that secure the collection-expansion manifold 26 to the collection line 28. In other example embodiments, the collection-expansion manifold 26 may be connected to the collection line 28 by other means, such as welding. The circular dotted line in Fig. 4 represents the perimeter of the passage through the collection line 28.

The discharge line outlet ends 27 may be connected to one side of the collection-expansion manifold 26 and the inlet of the collection line 28 is connected to the other side of the collection-expansion manifold 26. The discharge lines 24 are aligned with bolt holes 50 that extend through the surface of the collection-expansion manifold 26. The discharge line outlet ends 27 of the discharge lines 24 may be fixed to the collection-expansion manifold 26 by being welded to the collection-expansion manifold 26 (as shown in Fig. 5), coupled by a flange on each discharge line 24 that bolts to the collection-expansion manifold 26, or coupled in some other manner. There may be no restriction to the flow of biomass material and steam as they flow through the discharge lines 24, pass through the collection-expansion manifold 26 and into the collection line 28. The side of the collection-expansion manifold 26 that connects to the collection line 28 may include recesses that allow for the inclusion of wear nozzles or inserts at the exit of each discharge line 24. This arrangement would allow replacement of worn collection-expansion manifold 26 part or parts without requiring the replacement of the entire collection-expansion manifold 26.

An option for a separate nozzle or combination of nozzles may be used to inject water or chemicals before, in, near, or after the collection-expansion manifold 26.

The position of the collection-expansion manifold 26 and the length of the collection line 28 may be selected to achieve relatively short discharge lines 24 and thereby reduce the risk of plugging, blocking, or obstruction in the lines due to biomass deposits and/or tramp material, and to accommodate the plant layout and existing equipment. Further, the collection-expansion manifold 26 may be replaceable to allow for changes in number of discharge lines 24. In other example embodiments, the collection-expansion manifold 26 may have connections for extra discharge lines 24 that potentially may be added after the collection-expansion manifold 26 is initially installed.

While the invention has been described in connection with what is presently considered to be the most practical and preferred embodiment, it is to be understood that the invention Is not to be limited to the disclosed embodiment, but on the contrary, is intended to cover various modifications and equivalent arrangements included within the scope of the invention as defined in the appended claims.

## Claims

1. An apparatus for steam explosion treatment of biomass material (10) comprising:
at least two discharge lines (24) arranged so as to extend from a pressurized reactor vessel (20) at reactor vessel outlets (21), wherein each of the at least two discharge lines (24) has an internal cross-sectional area and wherein the discharge lines (24) are configured to receive the biomass material (10) and the steam (14) discharged from the pressurized reactor vessel (20);
a collection-expansion manifold (26) connected to outlet ends (27) of each of the discharge lines (24);
a collection line (28) having an inlet (29) connected to the collection-expansion manifold (26), wherein the collection line (28) is configured to receive the biomass material (10) and the steam (14) flowing from the discharge lines (24), and wherein the collection line (28) has an internal cross-sectional area that is substantially larger than the internal cross-sectional area of any of the discharge lines (24); and
a separation device (30) coupled to an outlet end of the collection line (28), wherein the separation device (30) is configured to receive the biomass material (10) and the steam (14) from the collection line (28).

2. The apparatus of claim 1, further comprising the pressure reactor vessel (20), configured to contain the biomass material (10) and steam (14); and wherein
each of the discharge lines (24) is coupled to an outlet (21) of the pressurized reactor vessel (20);
the collection line (28) is configured to receive the biomass material (10) and the steam (14) flowing from the outlet ends (27) of the discharge lines (24), and the collection line (28) has an internal cross-sectional area that is substantially larger than the cumulative internal cross-sectional areas of the discharge lines (24); and
the separation device (30) includes a gas outlet and a biomass material outlet.

3. The apparatus of Claim 1 or 2, wherein a length of each of the discharge lines (24) is substantially shorter than a length of the collection line (28).

4. The apparatus of Claim 1, 2 or 3, wherein the internal cross-sectional area of the collection line (28) is at least twice to four-hundred times the internal cross-sectional area of any one of the discharge lines (24).

5. The apparatus of any one of Claims 1 to 4, wherein a pressure in the inlet (29) of the collection line (28) is substantially less than a pressure in the outlet end (27) of each discharge line (24).

6. The apparatus of any one of the preceding Claims, further comprising a valve (22) for each of the discharge lines (24), wherein each valve (22) is positioned between the reactor vessel (20) and an inlet of the respective discharge line (24), and wherein each valve (22) preferably has a fully-open and a fully-closed operating position.

7. The apparatus of any one of the preceding Claims, wherein an internal diameter of each of the discharge lines (24) is substantially uniform throughout each of the discharge lines (24) .

8. The apparatus of Claim 7, wherein at least one of the discharge lines (24) has an internal cross-sectional area that is larger or smaller than an internal cross-sectional area of at least one other discharge line (24).

9. The apparatus of any one of the preceding Claims, further comprising a plurality of collection lines (28), wherein each collection line (28) is configured to receive the biomass material (10) and the steam (14) from at least one discharge line (24).

10. A method for steam explosion treatment comprising:
pressurizing and infusing biomass material (10) with steam (14) in a pressurized reactor vessel (20) having a plurality of reactor vessel outlets (21) from which a plurality of discharge lines (24) extend, so as to create a pressurized and infused biomass material (10);
passing the pressurized and infused biomass material (10) and the steam (14) from the pressurized reactor vessel (20) through at least one of the reactor vessel outlets (21) into at least one of the discharge lines (24);
passing the pressurized and infused biomass material (10) from the at least one of the discharge lines (24) through a collection-expansion manifold (26) connected to outlet ends (27) of each of the discharge lines (24) and into a collection line (28) ;
rapidly reducing pressure on the pressurized and infused biomass material (10) as the pressurized and infused biomass material (10) enters the collection line (28) from the collection-expansion manifold (26) to create steam exploded biomass material (10); and
transporting the steam exploded biomass material (10) through the collection line (28) to a separation device (30), in which the steam exploded biomass material (10) is separated from gases flowing with the steam exploded biomass material (10) in the collection line (28).

11. The method of Claim 10, wherein a distance travelled by the pressurized and infused biomass material (10) through the plurality of discharge lines (24) is substantially shorter than a length of the collection line (28).

12. The method of Claim 10 or 11, wherein at least one of the discharge lines (24) is closed to the pressurized and infused biomass material (10) by a valve (22) positioned between the pressurized reactor vessel (20) and an inlet of the at least one of the discharge lines (24) while at least one other one of the discharge lines (24) is open to and is receiving biomass material (10).

13. The method of any one of Claims 10 to 12 further comprising selectively opening at least one of the plurality of discharge lines (24) to achieve a certain combined flow rate of the biomass material (10) and the steam (14) through the collection-expansion manifold (26).

14. The method of any one of Claims 10 to 13, wherein at least one of the discharge lines (24) or a nozzle (42) inserted proximate to an inlet of the at least one of the plurality of discharge lines (24) defines a flow passage having an internal cross-sectional area that is substantially less than the internal cross-sectional area of at least one other discharge line (24) of the plurality of discharge lines (24).

## Patentansprüche

1. Vorrichtung für eine Steam-Explosion-Behandlung von Biomassematerial (10), aufweisend:
mindestens zwei Ablaufleitungen (24), die so angeordnet sind, dass sie sich von einem Druckreaktorbehälter (20) von Reaktorbehälterauslässen (21) aus erstrecken, wobei jede der mindestens zwei Ablaufleitungen (24) eine innere Querschnittsfläche hat und wobei die Ablaufleitungen (24) dazu ausgestaltet sind, das Biomassematerial (10) zu empfangen und den Dampf (14) von dem Druckreaktorbehälter (20) abzulassen;
einen Sammelexpansionskrümmer (26), der mit Auslassenden (27) jeder der Ablaufleitungen (24) verbunden ist;
eine Sammelleitung (28), die einen Einlass (29) hat, der mit dem Sammelexpansionskrümmer (26) verbunden ist, wobei die Sammelleitung (28) dazu ausgestaltet ist, das Biomassematerial (10) und den Dampf (14), die von den Ablaufleitungen (24) fließen, zu empfangen und wobei die Sammelleitung (28) eine innere Querschnittsfläche hat, die wesentliche größer als die innere Querschnittsfläche jeder der Ablaufleitungen (24) ist; und
eine Trennungsvorrichtung (30), die an ein Auslassende der Sammelleitung (28) gekoppelt ist, wobei die Trennungsvorrichtung (30) dazu ausgestaltet ist, das Biomassematerial (10) und den Dampf (14) von der Sammelleitung (28) zu empfangen.

2. Vorrichtung nach Anspruch 1, ferner aufweisend den Druckreaktorbehälter (20), der dazu ausgestaltet ist, das Biomassematerial (10) und Dampf (14) zu beinhalten; und wobei
jede der Ablaufleitungen (24) an einen Auslass (21) des Druckreaktorbehälters (20) gekoppelt ist;
die Sammelleitung (28) dazu vorgesehen ist, das Biomassematerial (10) und den Dampf (14), die von den Auslassenden (27) der Ablaufleitungen (24) fließen, zu empfangen, und die Sammelleitung (28) eine innere Querschnittsfläche hat, die wesentlich größer als die kumulierten inneren Querschnittsflächen der Ablaufleitungen (24) ist; und
die Trennungsvorrichtung (30) einen Gasauslass und einen Biomassematerialauslass beinhaltet.

3. Vorrichtung nach Anspruch 1 oder 2, wobei eine Länge jeder der Ablaufleitungen (24) wesentlich kürzer als eine Länge der Sammelleitung (28) ist.

4. Vorrichtung nach Anspruch 1, 2 oder 3, wobei die innere Querschnittsfläche der Sammelleitung (28) mindestens zweimal bis vierhundertmal die innere Querschnittsfläche von jeder einzelnen der Ablaufleitungen (24) hat.

5. Vorrichtung nach einem der vorhergehenden Ansprüche 1 bis 4, wobei ein Druck in dem Einlass (29) der Sammelleitung (28) wesentlich kleiner als ein Druck in dem Auslassende (27) jeder Ablaufleitung (24) ist.

6. Vorrichtung nach einem der vorhergehenden Ansprüche, ferner aufweisend ein Ventil (22) für jede der Ablaufleitungen (24), wobei jedes Ventil (22) zwischen dem Reaktorbehälter (20) und einem Einlass der jeweiligen Ablaufleitung (24) positioniert ist und wobei jedes Ventil (22) vorzugsweise eine vollständig geöffnete und eine vollständig geschlossene Betätigungsposition hat.

7. Vorrichtung nach einem der vorangehenden Ansprüche, wobei ein innerer Durchmesser von jeder der Ablaufleitungen (24) im Wesentlichen durchgehend gleichförmig bei jeder der Ablaufleitungen (24) ist.

8. Vorrichtung nach Anspruch 7, wobei mindestens eine der Ablaufleitungen (24) eine innere Querschnittsfläche hat, die größer oder kleiner als eine innere Querschnittsfläche von mindestens einer anderen Ablaufleitung (24) ist.

9. Vorrichtung nach einem der vorangegangenen Ansprüche, ferner aufweisend eine Vielzahl von Sammelleitungen (28), wobei jede Sammelleitung (28) dazu ausgestaltet ist, das Biomassematerial (10) und den Dampf von mindestens einer Ablaufleitung (24) zu empfangen.

10. Verfahren für eine Steam-Explosion-Behandlung, aufweisend:
Druckbeaufschlagung und Infundieren des Biomassematerials (10) mit Dampf (14) in einem Druckreaktorbehälter (20), der eine Mehrzahl von Reaktorbehälter-Auslässen (21) hat, von denen aus sich mehrere Ablaufleitungen (24) erstrecken, um unter Druck stehendes und infundiertes Biomassematerial (10) herzustellen;
Weitergeben des unter Druck stehenden und infundierten Biomassematerials (10) und des Dampfs (14) von dem Druckreaktorbehälter (20) durch mindestens einen der Reaktorbehälterauslässen (21) in mindestens eine der Ablaufleitungen (24);
Weitergeben des unter Druck stehenden und infundierten Biomassematerials (10) von der mindestens einen der Ablaufleitungen (24) durch einen Sammelexpansionskrümmer (26), der mit Auslassenden (27) jeder der Ablaufleitungen (24) verbunden ist, und in eine Sammelleitung (28);
schnelles Reduzieren des Drucks von dem unter Druck stehenden und infundierten Biomassematerial (10), während das unter Druck stehende und infundierte Biomassematerial (10) von dem Sammelexpansionskrümmer (26) in die Sammelleitung (28) eintritt, um steam-explodedtes Biomassematerial (10) herzustellen; und
Transportieren des steam-explodedten Biomassematerials (10) durch die Sammelleitung (28) zu einer Trennungsvorrichtung (30), in welcher das steam-explodedte Biomassematerial (10) von Gasen getrennt wird, die mit dem steam-explodedten Biomassematerial (10) in der Sammelleitung (28) fließen.

11. Verfahren nach Anspruch 10, wobei eine Strecke, die von dem unter Druck stehenden infundierten Biomassematerial (10) durch die Vielzahl von Ablaufleitungen (24) zurückgelegt wird, wesentlich kleiner als eine Länge der Sammelleitung (28) ist.

12. Verfahren nach Anspruch 10 oder 11, wobei mindestens eine der Ablaufleitungen (24) für das unter Druck stehende und infundierte Biomassematerial (10) durch ein Ventil (22) geschlossen ist, das zwischen dem Druckreaktorbehälter (20) und einem Einlass der mindestens einen Ablaufleitung (24) positioniert ist, während mindestens eine andere der Ablaufleitungen offen ist und Biomassematerial (10) empfängt.

13. Verfahren nach einem der Ansprüche 10 - 12, ferner aufweisend ein selektives Öffnen von mindestens einer der Vielzahl von Ablaufleitungen (24), um eine bestimmte kombinierte Flussrate von dem Biomassematerial (10) und dem Dampf (14) durch den Sammelexpansionskrümmer (26) zu erreichen.

14. Verfahren nach einem der Ansprüche 10 - 13, wobei mindestens eine der Ablaufleitungen (24) oder eine Düse (42), die in der Nähe eines Einlasses der mindestens einen von einer Vielzahl von Ablaufleitungen (24) eingesteckt ist, einen Flussdurchgang definiert, der eine innere Querschnittsfläche hat, die wesentlich kleiner als die innere Querschnittsfläche von mindestens einer anderen Ablaufleitung (24) von der Vielzahl von Ablaufleitungen (24) ist.

## Revendications

1. Appareil de traitement par vapocraquage de matériau de biomasse (10) comprenant :
au moins deux conduites d'évacuation (24) agencées de façon à s'étendre à partir d'une cuve de réacteur sous pression (20) au niveau d'orifices de sortie de cuve de réacteur (21), dans lequel chacune des au moins deux conduites d'évacuation (24) a une aire en coupe interne et dans lequel les conduites d'évacuation (24) sont configurées pour recevoir le matériau de biomasse (10) et la vapeur (14) évacuée depuis la cuve de réacteur sous pression (20) ;
un manifold de collecte-détente (26) raccordé à des extrémités d'orifice de sortie (27) de chacune des conduites d'évacuation (24) ;
une conduite de collecte (28) ayant un orifice d'entrée (29) raccordé au manifold de collecte-détente (26), dans lequel la conduite de collecte (28) est configurée pour recevoir le matériau de biomasse (10) et la vapeur (14) s'écoulant depuis les conduites d'évacuation (24), et dans lequel la conduite de collecte (28) a une aire en coupe interne qui est sensiblement plus grande que l'aire en coupe interne de l'une quelconque des conduites d'évacuation (24) ; et
un dispositif de séparation (30) couplé à une extrémité d'orifice de sortie de la conduite de collecte (28), dans lequel le dispositif de séparation (30) est configuré pour recevoir le matériau de biomasse (10) et la vapeur (14) depuis la conduite de collecte (28).

2. Appareil selon la revendication 1, comprenant en outre la cuve de réacteur sous pression (20), configurée pour contenir le matériau de biomasse (10) et la vapeur (14) ; et dans lequel
chacune des conduites d'évacuation (24) est couplée à un orifice de sortie (21) de la cuve de réacteur sous pression (20) ;
la conduite de collecte (28) est configurée pour recevoir le matériau de biomasse (10) et la vapeur (14) s'écoulant depuis les extrémités d'orifice de sortie (27) des conduites d'évacuation (24), et la conduite de collecte (28) a une aire en coupe interne qui est sensiblement plus grande que les aires en coupe internes cumulées des conduites d'évacuation (24) ; et
le dispositif de séparation (30) comporte un orifice de sortie de gaz et un orifice de sortie de matériau de biomasse.

3. Appareil selon la revendication 1 ou 2, dans lequel une longueur de chacune des conduites d'évacuation (24) est sensiblement plus courte qu'une longueur de la conduite de collecte (28).

4. Appareil selon la revendication 1, 2 ou 3, dans lequel l'aire en coupe interne de la conduite de collecte (28) est d'au moins deux fois à quatre cents fois l'aire en coupe interne de l'une quelconque des conduites d'évacuation (24).

5. Appareil selon l'une quelconque des revendications 1 à 4, dans lequel une pression dans l'orifice d'entrée (29) de la conduite de collecte (28) est sensiblement inférieure à une pression dans l'extrémité d'orifice de sortie (27) de chaque conduite d'évacuation (24).

6. Appareil selon l'une quelconque des revendications précédentes, comprenant en outre une vanne (22) pour chacune des conduites d'évacuation (24), dans lequel chaque vanne (22) est positionnée entre la cuve de réacteur (20) et un orifice d'entrée de la conduite d'évacuation (24) respective, et dans lequel chaque vanne (22) a de préférence une position de fonctionnement d'ouverture totale et de fermeture totale.

7. Appareil selon l'une quelconque des revendications précédentes, dans lequel un diamètre interne de chacune des conduites d'évacuation (24) est sensiblement uniforme tout le long de chacune des conduites d'évacuation (24).

8. Appareil selon la revendication 7, dans lequel au moins l'une des conduites d'évacuation (24) a une aire en coupe interne qui est plus grande ou plus petite qu'une aire en coupe interne d'au moins une autre conduite d'évacuation (24).

9. Appareil selon l'une quelconque des revendications précédentes, comprenant en outre une pluralité de conduites de collecte (28), dans lequel chaque conduite de collecte (28) est configurée pour recevoir le matériau de biomasse (10) et la vapeur (14) depuis au moins une conduite d'évacuation (24).

10. Procédé de traitement par vapocraquage comprenant :
la mise sous pression et l'infusion d'un matériau de biomasse (10) avec de la vapeur (14) dans une cuve de réacteur sous pression (20) ayant une pluralité d'orifices de sortie de cuve de réacteur (21) depuis lesquels s'étend une pluralité de conduites d'évacuation (24), de façon à créer un matériau de biomasse sous pression et infusé (10) ;
le passage du matériau de biomasse sous pression et infusé (10) et de la vapeur (14) depuis la cuve de réacteur sous pression (20) à travers au moins l'un des orifices de sortie de cuve de réacteur (21) dans au moins l'une des conduites d'évacuation (24) ;
le passage du matériau de biomasse sous pression et infusé (10) depuis l'au moins une des conduites d'évacuation (24) à travers un manifold de collecte-détente (26) raccordé à des extrémités d'orifice de sortie (27) de chacune des conduites d'évacuation (24) et dans une conduite de collecte (28) ;
la réduction rapide de pression sur le matériau de biomasse sous pression et infusé (10) lorsque le matériau de biomasse sous pression et infusé (10) entre dans la conduite de collecte (28) depuis le manifold de collecte-détente (26) pour créer un matériau de biomasse vapocraqué (10) ; et
le transport du matériau de biomasse vapocraqué (10) à travers la conduite de collecte (28) jusqu'à un dispositif de séparation (30), dans lequel le matériau de biomasse vapocraqué (10) est séparé de gaz s'écoulant avec le matériau de biomasse vapocraqué (10) dans la conduite de collecte (28).

11. Procédé selon la revendication 10, dans lequel une distance parcourue par le matériau de biomasse sous pression et infusé (10) à travers la pluralité de conduites d'évacuation (24) est sensiblement plus courte qu'une longueur de la conduite de collecte (28).

12. Procédé selon la revendication 10 ou 11, dans lequel au moins l'une des conduites d'évacuation (24) est fermée au matériau de biomasse sous pression et infusé (10) par une vanne (22) positionnée entre la cuve de réacteur sous pression (20) et un orifice d'entrée de l'au moins une des conduites d'évacuation (24) tandis qu'au moins une autre des conduites d'évacuation (24) est ouverte au matériau de biomasse (10) et reçoit celui-ci.

13. Procédé selon l'une quelconque des revendications 10 à 12, comprenant en outre l'ouverture sélective d'au moins l'une de la pluralité des conduites d'évacuation (24) pour parvenir à un certain débit combiné du matériau de biomasse (10) et de la vapeur (14) à travers le manifold de collecte-détente (26).

14. Procédé selon l'une quelconque des revendications 10 à 13, dans lequel au moins l'une des conduites d'évacuation (24) ou une buse (42) insérée à proximité d'un orifice d'entrée de l'au moins une de la pluralité de conduites d'évacuation (24) définit un passage d'écoulement ayant une aire en coupe interne qui est sensiblement inférieure à l'aire en coupe interne d'au moins une autre conduite d'évacuation (24) de la pluralité de conduites d'évacuation (24).
